# EUROPEAN PATENT APPLICATION

(11) **EP 1 493 616 A2**
(43) Date of publication of application: **05.01.2005**
(21) Application number: 04103001.6
(22) Date of filing: 28.06.2004
(51) Int. Cl.: B60N 2/28

(54) **Child seat anchorage system to a car seat**

(30) Priority: 04.07.2003 ES 200301641
(71) Applicant: Play, S.A., 08184 Palau de Plegamans (ES)
(72) Inventor: Jane Stopp, Joaquim, 08184 PALAU DE PLEGAMANS (ES)
(74) Representative: Ponti Sales, Adelaida

(57) **Abstract**

The child seat (2) anchoring system to a car seat, fixing the child seat (2) to the car seat by means of the car seat belt (3), comprising a base (1) on which the child seat (2) is fixed in a detachable way, the base comprises anchorage detachable elements (4) for the seat belt (3), characterised in that said anchorage detachable elements at least comprise a peg (4) holding the car seat belt (3). The system also comprises tightening means (5) for the seat belt (3) associated with said detachable anchoring means (4) of it. It permits to leave the base permanently attached to the car.

## Description

The present invention refers to a child seat anchorage system to a car seat, comprising a base element over which such a child seat is detachably fixed in place.

### BACKGROUND OF THE INVENTION

In order to achieve the maximum security, children must travel in cars using specially designed child security seats.

These child seats are classified in different groups, depending on the weight of the child who will use them. Some of the seats for new-borns and children up to 9 kg. (Groups 0 or 0+) can also be used in conventional strollers, so they have a double usage: as a Moses basket to go for a walk and to be used in the car as a security seat.

These security seats can be fitted in the front or rear seat and are fitted to the car seat using the seat belt of the car. The fixation is done by passing the seat belt under the security seat and over the upper part of the back. To make sure that the seat belt stays in this position, using the side slots in the lower part of the seat and a slot in the top of the beck of the seat.

In the practice, passing the seat belt through the side slots in the lower part of the seat is awkward, or even complicated if the adult person fixating the seat is not experienced.

We must bear in mind that the seat is constantly attached and detached to also use it as a Moses basket.

In order to solve those drawbacks the fixation system described in the Spanish patent ES200200603 was devised, not published at the time of this application and by the same applicant.

This patent describes the use of a base element in which the child seat is detachably fixed in place. In this particular case, the fixation of the base element to the car seat is done by passing the seat belt between the base and the support element defined by the fixation structure

In practice, we have checked that the fixation of the structure to the car seat is not the appropriate.

### DESCRIPTION OF THE INVENTION

With the fixation system of this invention the above mentioned disadvantages are solved, adding some advantages that will be described.

The child seat anchorage system of the present invention fixes the child seat to the car seat by means of the seat belt of the car, comprising a base in which the child seat is detachably fixed in place, the base comprises detachable fixation elements for the seat belt, and it is characterised in that these detachable fixation elements comprise at least a peg for the seat belt of the car.

In this way, the fixation of the base is done in a easy and comfortable way, leaving the base permanently attached to the car. Also the fixation done by means of pegs is absolutely reliable, and comply with all the security requirements.

Advantageously, the anchorage system of the present invention also comprises elements to tighten the seat belt associated with the detachable fixation elements, which make it impossible for the base to move over the car seat.

According to the preferred embodiment, the elements to tighten the seat belt are formed by an articulated body which can be moved from a position of fixating/release of the belt and a position of tightening.

Preferably, the peg or pegs are on the above mentioned articulated body.

Advantageously, the articulated body comprises a fixation element for its fixation to the base on the position of tightening.

According to a preferred embodiment, such detachable fixation elements between the base and the child seat comprise an articulated anchoring element that can be moved from a position of fixation to a position of release.

Advantageously, such detachable fixation elements between the base and the child seat comprise elastic elements, being such an anchoring element from the position of fixation to the position of release against the action of the elastic elements.

To make the removal of the child seat easier, such detachable fixation elements between the base and the child seat comprise at least a lever to put the anchoring element in the position of release.

Preferably, such detachable fixation elements between the base and the child seat comprise a couple of bars in the lower part of the child seat, one of which is associated with the anchoring element and the other is associated with at least a hole in the base.

To make its transport easier, the base comprises a vertical part mounted in a detachable way in the rest of the base.

### BRIEF DESCRIPTION OF THE DRAWINGS

For a better understanding of all of the above mentioned, there have been attached a series of drawings in which, in a schematic way and only as an example not limited to that, a practical case is presented.
Figure 1 is a view in perspective of the base of the anchoring system of the present invention;
Figure 2a is a view in perspective of the detachable fixation elements of the child seat on the release position;
Figure 2b is a view in perspective of the detachable fixation elements of the child seat on the position for its use; and
Figure 3 is a view in perspective of the lower part of the child seat.

### DESCRIPTION OF A PREFERRED EMBODIMENT

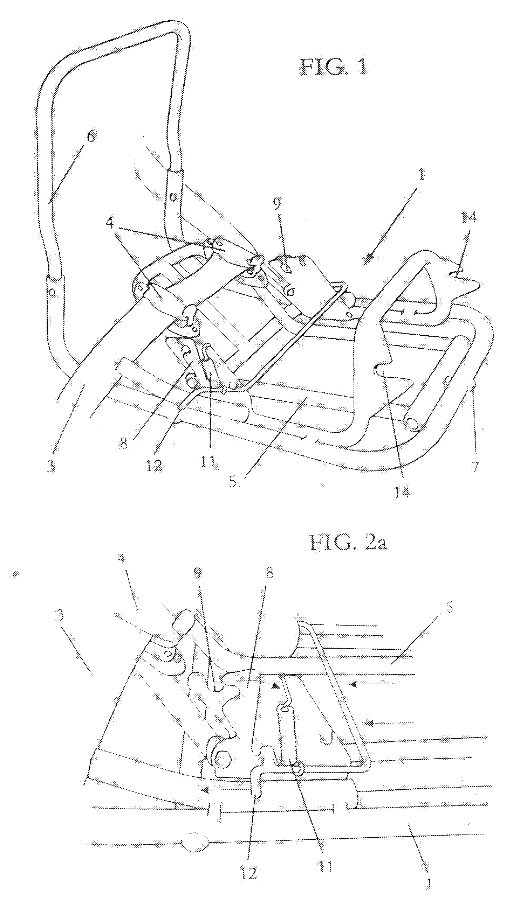

As it can be seen in Figure 1, the anchoring system of the present invention comprises a base 1 in which a child seat 2 is fixed in a detachable way (represented in figure 3).

The base 1 is put over a car seat (not represented) and is fixed by means of the seat belt 3 of the car. The base 1 comprises a vertical part 6 mounted in a detachable way regarding the rest of the base 1. This vertical part 6 will be in contact with the back of the car seat.

In the represented embodiment, the base 1 is fixed in a detachable way to the car seat by means of a couple of pegs 4, through which the car seat belt 3 is passed.

These pegs 4 are mounted over an articulated body 5 that can be moved between 2 positions to tighten the seat belt 3: a first position of use (represented in figure 1) and a second position of fixation and release of the seat belt 3 (not represented in the figures). As it can be noted in figure 1, the articulated body 5 is in an horizontal position when in use, whereas in the second position is leaning towards the seat back.

The articulated body 5 comprises an anchoring element 7 to fix it to the base 1 in the position of use, as it can be seen in figure 1.

To fix in a detachable way the child seat 2 to the base 1, the anchoring system of the present invention comprises an articulated anchoring element 8, which can be precisely seen in figures 2a y 2b.

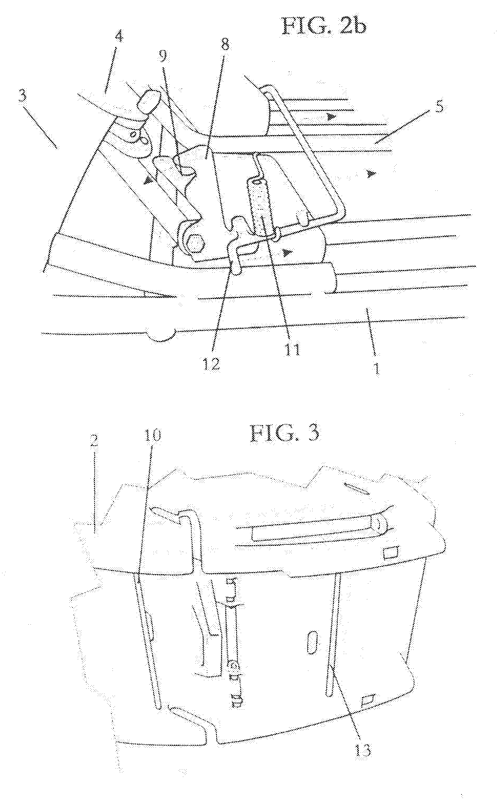

On each side of the base 1, this comprises a first hole 9 for a first bar 10 in the lower part of the child seat 2 (figure 3). This first hole 9 is associated with the articulated anchoring element 8, which can be moved from a position of fixation (figure 2b) and a position of release (figure 2a) against the action of a spring 11.

The anchoring element 8 comprises at least a lever 12 to facilitate the removal of the child seat 2.

The child seat 2 also comprises a second bar 13 in its lower part, which fits in holes 14 at each side of the base 1.

To sue the anchoring system of the present invention, first the base 1 must be put on the car seat with the articulated body 5 in the seat belt fixation position 3.

Next, the seat belt 3 is passed through the pegs, as it can be seen in figure 1. Once the seat belt 3 is in place, it must be tightened by setting the articulated body 5 in the tightening position represented in figure 1, fixating it in this position using the fixation element 7.

Once the seat belt 3 has been tightened, the child seat 2 must be put on the base. This is done by inserting the second bar 13 in the second holes 14 and, next, pressing the child seat 2 down, in such a way that the first bar 10 is fitted in the fist holes 9 against the action of the spring 11.

To remove the child seat 2, the lever 12 must be pulled to put the anchoring element 8 in the position of release.

If you wish to remove the base 1, which is not the habitual since its intention is that of remain fixed in the car, you must follow the reverse steps to those above mentioned.

Despite it has been made a reference to a specific making of this invention, it is evident for a person skilled in the art that the described anchoring system can suffer numerous variations and modifications, and all of the details mentioned can be substituted by others wich are technically equivalent, without departing from protection scope defined by the attached claims.

## Claims

1. Child seat (2) anchoring system to a car seat, fixing the child seat (2) to the car seat by means of the car seat belt (3), comprising a base (1) on which the child seat (2) is fixed in a detachable way, the base comprises anchorage detachable elements (4) for the seat belt (3), **characterised in that** said anchorage detachable elements at least comprise a peg (4) holding the car seat belt (3).

2. Anchorage system according to claim 1, **characterised in that** it also comprises elements (5) to tighten the seat belt (3) associated with the detachable anchorage elements (4) of it.

3. System for the fixation according to claim 2, **characterised in that** such elements to tighten the seat belt (3) are formed by an articulated body (5) which can be moved from a fixation and release position of the seat belt (3) and a position of tightening.

4. Anchorage system according to claim 3, **characterised in that** such peg or pegs (4) are on top of the articulated body (5).

5. Anchorage system according to claim 3, **characterised in that** such an articulated body (5) comprises a fixation element (7) for its fixation to the base (1) in the position of tightening.

6. Anchorage system according to claim 1, **characterised in that** the detachable fixation between the base (1) and the child seat (2) is carried out by means of an articulated anchorage element (8) which can be moved from a position of fixation to a position of release.

7. Fixation system according to claim 6, **characterised in that** the detachable fixation elements between the base (1) and the child seat (2) comprise elastic elements (11), setting such an anchorage element (8) from the position of fixation to the position of release against the action of the mentioned elastic elements (11).

8. Fixation system according to claim 6, **characterised in that** the detachable fixation elements between the base (1) and the child seat (2) comprise at least a lever (12) to fix the anchorage element (7) in the position of release.

9. Fixation system according to claim 6, **characterised in that** the detachable fixation elements between the base (1) and the child seat (2) comprise a couple of bars (10, 13) allocated in the lower part of the child seat (1), one of which is associated with such an anchorage element (8) and the other is associated with at least a hole (14) defined in the base (1).

10. Fixation system according to any of the above mentioned claims, **characterised in that** the base (1) comprises a vertical part (6) mounted in a detachable way in the rest of the base (1).
